# EUROPEAN PATENT APPLICATION

(11) **EP 1 939 436 A1**
(43) Date of publication of application: **02.07.2008**
(21) Application number: 06811879.3
(22) Date of filing: 17.10.2006
(51) Int. Cl.: F02G 5/04, F02G 1/055, F02G 5/02

(54) **COGENERATION SYSTEM**

(30) Priority: 18.10.2005 JP 2005303488
(71) Applicant: Rinnai Corporation, Nagoya-shi, Aichi-ken 454-0802 (JP)
(72) Inventor: JINNO, Hideyuki, Aichi;4540802 (JP); KAWAMURA, Hatsuhiko, Aichi;4540802 (JP)
(74) Representative: Cloughley, Peter Andrew
(86) International application number: PCT/JP2006/320624
(87) International publication number: WO 2007/046362

(57) **Abstract**

A cogeneration system is preferably provided with a Stirling engine that has a pillar-shaped heated head, a burner that faces an end surface of the heated head of the Stirling engine, a first exhaust passage that extends along the side surface of the heated head of the Stirling engine, a second exhaust passage that continues from the first exhaust passage and extends along a side of the first exhaust passage opposite to the Stirling engine , and a first heat exchanger that is arranged on a side of the second exhaust passage opposite to the Stirling engine. This cogeneration system can recover more heat energy from combusted gas.

## Description

### Cross-Reference to Related Application

This application claims priority to Japanese Patent Application No. 2005-303488, filed on October 18, 2005, the contents of which are hereby incorporated by reference into the present application.

### Background of the Invention

### Field of the Invention

The present invention relates to a cogeneration system. In particular, the present invention relates to a cogeneration system that includes a Stirling engine.

### Description of the Related Art

A cogeneration system has been developed in which a generator is driven by means of fuel such as combustible gas, and heat which is produced during the driving is recovered for use in air conditioning, heating water supplies(prefer this: water heating), or the like.
PCT publication No. WO 01/90656 discloses a cogeneration system including a Stirling engine. This cogeneration system comprises, in addition to the Stirling engine, a burner for heating a heated head of the Stirling engine and a heat exchanger for recovering heat from gas combusted in the burner. In the cogeneration system, the gas combusted in the burner is directed through a duct to the heat exchanger.

### Brief Summary of the Invention

While gas combusted in the burner is being transported through the duct into the heat exchanger in the above-described conventional system, the combusted gas heat can escape to the outside atmosphere. Then, exhaust heat (which refers to heat released into the atmosphere without itself being used) is wastefully released, resulting in a decline in efficiency of the cogeneration system.
The present invention, which solves the above issue, provides a technology capable of reducing exhaust heat by preventing the combusted gas heat from escaping to the outside atmosphere.

A cogeneration system of the present teachings is provided with a Stirling engine, a burner, a first exhaust passage, a second exhaust passage that continues from the first exhaust passage, and a first heat exchanger. The Stirling engine has a pillar-shaped heated head. The burner faces an end surface of the heated head of the Stirling engine. The first exhaust passage extends along the side surface of the heated head of the Stirling engine. The second exhaust passage extends along a side of the first exhaust passage opposite to the Stirling engine. The first heat exchanger is arranged on a side of the second exhaust passage opposite to the Stirling engine.

In the cogeneration system, combusted gas from the burner is initially directed to the first exhaust passage. Since, in the first exhaust passage, the combusted gas from the burner flows along the side surface of the heated head in the Stirling engine, the combusted gas heat is used for heating the Stirling engine. After passing through the first exhaust passage, the combusted gas is then directed toward the second exhaust passage. In the second exhaust passage, because the combusted gas from the burner flows along the first heat exchanger, heat is recovered from the combusted gas by the first heat exchanger.
The cogeneration system has the first exhaust passage and the second exhaust passage disposed in a laminated form between the Stirling engine and the first heat exchanger. In this manner, the escape of combusted gas heat to the outside atmosphere is prevented, and thereby efficient heating of the Stirling engine and exhaust heat recovery by means of the first heat exchanger is realized. In addition, high-temperature heating of the heated head of the Stirling engine is realized since the first exhaust passage is maintained at elevated temperatures due to isolation of the first exhaust passage from the first heat exchanger via the second exhaust passage.
According to the cogeneration system, the combusted gas heat escaping to the outside atmosphere is prevented, and thereby the exhaust heat is preferably reduced.

In the aforementioned cogeneration system, it is preferable that the first exhaust passage surrounds the side surface of the heated head of the Stirling engine, the second exhaust passage surrounds the first exhaust passage on its outside, and the first heat exchanger surrounds the second exhaust passage on its outside.
Since the first exhaust passage and the second exhaust passage are surrounded by the Stirling engine and the first heat exchanger in the cogeneration system, the combusted gas heat escaping to the outside atmosphere from the burner is further suppressed.

The cogeneration system may include a second heat exchanger that is connected to a downstream end of the second exhaust passage.
It enables recovery of heat remaining in the combusted gas discharged out of the second exhaust passage, and thereby further reduces exhaust heat.

It is preferable that the second heat exchanger be a latent heat exchanger that can extract latent heat by condensing vapor from combusted gas.
Since the combusted gas from the burner contains high volumes of vapor, latent heat can be extracted from the combusted gas by condensing the high volumes of vapor. When the second heat exchanger is the latent heat exchanger, a greater amount of heat can be further recovered from the combusted gas whose temperature has already been lowered by the first heat exchanger, resulting in reduction of exhaust heat.

According to the present invention, preventing combusted gas heat from escaping to the outside atmosphere reduces the exhaust heat, and thereby energy efficiency in the cogeneration system can be remarkably enhanced.

### Brief Description of the Drawings

Fig. 1 schematically shows a structure of a cogeneration system;
Fig. 2 is a cross-sectional view showing a schematic configuration of a thermal combustor;
Fig. 3 is a perspective view showing the exterior of the thermal combustor;
Fig. 4 is a perspective view showing a partial configuration of the thermal combustor, and
Fig. 5 is a graph showing changes in temperature of combusted gas that is flowing through an exhaust passage.

Reference Numerals in the Drawings
10: cogeneration system
20: thermal combustor
24: burner
26: first heat exchanger
40: second heat exchanger
70: Stirling engine
A: first exhaust passage
B: second exhaust passage
C: third exhaust passage
D: fourth exhaust passage
E: fifth exhaust passage

### Detailed Description of the Invention

### Main Features of an Embodiment of the Invention

Feature 1: A cogeneration system comprises a free piston type Stirling engine.
Feature 2: The cogeneration system comprises a burner for burning combustible gas.
Feature 3: The cogeneration system comprises a blower that draws in combusted gas from the burner to discharge the gas to the outside.

### Embodiment of the Invention

A preferred embodiment of the present invention will be described with reference to the drawings.

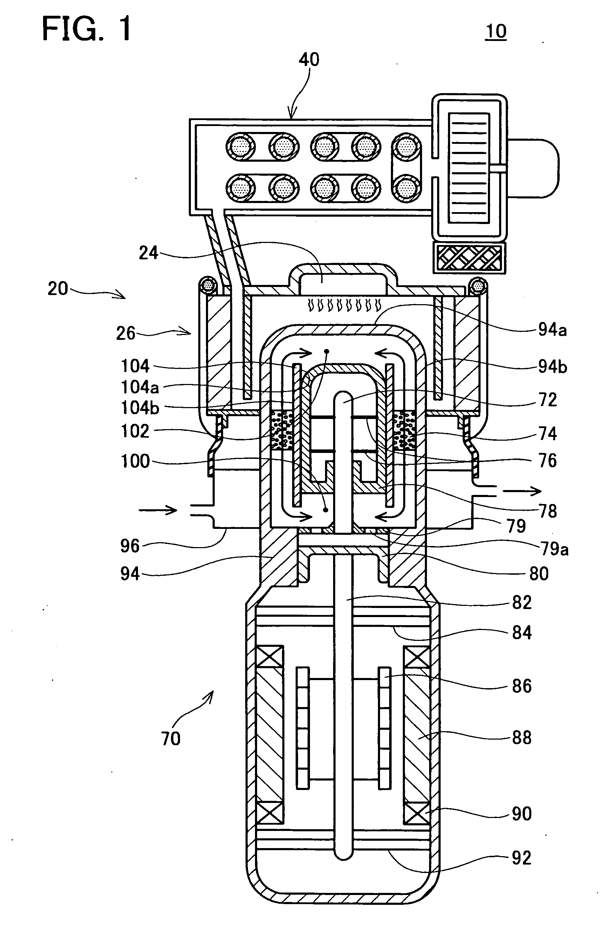

Fig. 1 is a schematic diagram showing a structure of a cogeneration system 10 according to the present embodiment. The cogeneration system 10 comprises a Stirling engine 70 and a thermal combustor 20. The Stirling engine 70 is equipped with pillar-shaped (more specifically, cylindrical pillar-shaped) heated heads 94a and 94b as well as a cooler 96. In view of vibrations of the Stirling engine 70 under operating conditions, the Stirling engine 70 is supported via an elastic member of a frame (not illustrated) of the cogeneration system 10. However, the thermal combustor 20 is fixed to the frame. Accordingly, the thermal combustor 20 and the Stirling engine 70 are not fixed to each other, which ensures that, even if the Stirling engine 70 vibrates during its operation, the vibrations of the Stirling engine 70 are not transferred to the thermal combustor 20.
The thermal combustor 20 includes a burner 24 for burning combustible gas to heat the heated heads 94a and 94b of the Stirling engine. Further, the thermal combustor 20 also includes heat exchangers 26 and 40 for recovering heat produced while the Stirling engine is being heated. The Stirling engine 70 is driven when the heated heads 94a and 94b are heated by the thermal combustor 20 while being cooled by the cooler 96, to thereby generate and provide alternating current power to external electrical machinery or apparatuses. The cogeneration system 10 is a combined heat and power supplying system in which combustible gas is burned to supply both electricity and heat.

Referring to Fig. 1, the structure of the Stirling engine 70 is described. The Stirling engine 70, which is a so-called beta type Stirling engine, comprises a housing 94 formed in the shape of a pillar outline, a displacer 78 installed in working spaces 100 and 102 inside the housing 94, and an output piston 80 which faces the working space 100 in the housing 94. The heated heads 94a and 94b in the Stirling engine 70 are located at an upper end of the housing 94 in the drawing.
The displacer 78 is housed in a cylinder 104 installed in the working spaces 100 and 102, and is slidably supported by a shaft 72 which is fixed to the housing 94. The displacer 78 is connected to the shaft 72 via two spring members 76, thereby allowing the displacer 78 to reciprocate along an inner surface 104a of the cylinder 104 at a predetermined frequency (a characteristic frequency). The characteristic frequency of the displacer 78 can be adjusted by means of spring constants of the two spring members 76. In this connection, a plate spring or the like may be used for each of the spring members 76. On the other hand, the shaft 72 is secured to the housing 94 via a fixed plate 79 in which a plurality of holes 79a is formed.

The working spaces 100 and 102 are filled with a working medium of helium gas. Regarding the working spaces 100 and 102, the working space 102 located above the displacer 78 in the drawing is a heated-part working space to be heated by the thermal combustor 20. The heated-part working space 102 is disposed in an internal area between the heated heads 94a and 94b. On the other hand, the working space 100 located below the displacer 78 in the drawing is a cooled-part working space to be cooled by the cooler 96. The heated-part working space 102 communicates with the cooled-part working space 100 by a space between an outer surface 104b of the cylinder 104 and an inner surface of the housing 94, and a regenerator 74 is installed in the communicating space.

In the Stirling engine 70, helium gas in the heated-part working space 102 is continuously heated while helium gas in the cooled-part working space 100 is continuously cooled, causing the displacer 78 to reciprocate inside the cylinder 104. The reciprocating motion of the displacer 78 achieves a change in the ratio between the volumes of the heated-part working space 102 and the cooled-part working space 100. For example, as the displacer 78 moves to a heated-part working space 102' side, the heated-part working space 102 decreases, and the cooled-part working space 100 accordingly increases. At this time, the helium gas in the heated-part working space 102 moves through the regenerator 74 into the cooled-part working space 100. Contrarily, as the displacer 78 moves to a cooled-part working space 100 side, the cooled-part working space 100 becomes smaller, and the heated-part working space 102 accordingly increases. Then, the helium gas contained in the cooled-part working space 100 moves through the regenerator 74 into the heated-part working space 102. Since the change of the ratio between the volume of the heated-part working space 102 and the volume of the cooled-part working space 100 brings about a change in a proportion of helium gas at high temperatures and helium gas at low temperatures, pressure of the overall working spaces 100 and 102 varies. The pressure variation in the overall working spaces 100 and 102 is applied to the output piston 80 facing the space 100.

The output piston 80, having a shaft 82 connected via spring members 84 and 92 to the housing 94, is supported so as to be reciprocatable along a vertical direction of the drawing at a predetermined frequency (a characteristic frequency). The characteristic frequency of the output piston 80 can be changed by means of spring constants of the spring members 84 and 92. In this embodiment, the characteristic frequency of the output piston 80 is adjusted to be equal to the characteristic frequency of the displacer 78.
The output piston 80 is forced to reciprocate by the above-described pressure variation that occurs in the overall working spaces 100 and 102. Then, the frequency of the output piston 80 matches the frequency of the displacer 78. Since the characteristic frequencies of the output piston 80 and the displacer 78 are set to an equal value, unnecessary damping of the output piston 80 or the displacer 78 is prevented.

As shown in Fig. 1, a plurality of magnets 86 is arranged on the shaft 82 of the output piston 80. Further, on a housing 94 side, an iron core 88 and a coil 90 are disposed at a location facing the plurality of magnets 86. In the Stirling engine 70, a generator is constructed using a group of the magnets 86, the iron core 88, the coil 90, and other components, so as to generate alternating current power by the reciprocating motion of the output piston 80. Here, a frequency of the alternating current power to be generated is equal to a frequency of the reciprocating motion of the output piston 80. Accordingly, the frequency of the alternating current power to be generated can be adjusted by changing the characteristic frequency of the displacer 78 or the output piston 80.

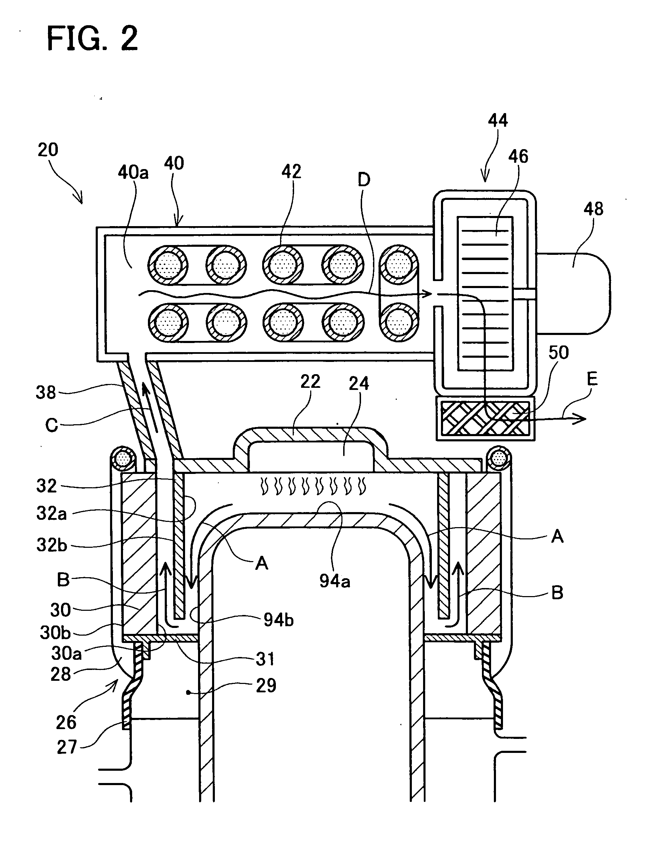

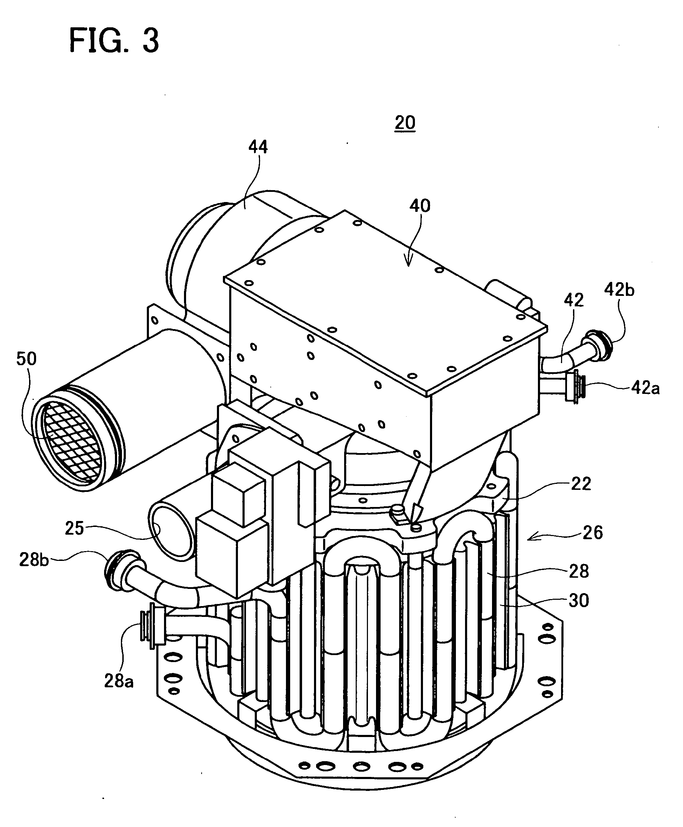

Next, the thermal combustor 20 is described. Fig. 2 is a cross sectional view showing a schematic configuration of the thermal combustor 20, and Fig. 3 is a perspective view showing the exterior of the thermal combustor 20.
As illustrated in Figs. 2 and 3, the thermal combustor 20 comprises a head plate 22 and a burner 24 attached to the head plate 22. The burner 24 faces toward an end surface 94a of the heated head in the Stirling engine 70. An air fuel mixture in which combustible gas and air are mixed is supplied from a gas supply port 25 to the burner 24. The burner 24 bums the combustible gas to heat up the end surface 94a of the heated head and a side surface 94b of the heated head in the Stirling engine 70. Then, the burner 24 heats up the end surface 94a of the heated head to approximately 650°C and the side surface 94b of the heated head to approximately 600°C.

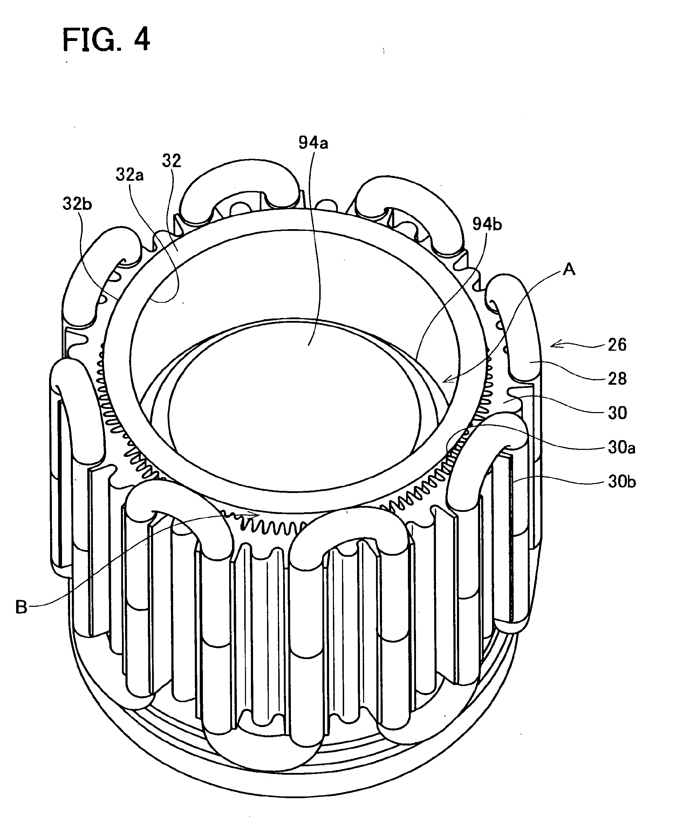

Fig. 4 is a perspective view showing the thermal combustor 20 from which the head plate 22 and other components are removed. As illustrated in Figs. 2 and 4, the thermal combustor 20 includes a cylindrical bulkhead member 32 attached to the head plate 22. The bulkhead member 32 extends along the side surface 94b of the heated head in the Stirling engine 70. A gap is provided between the side surface 94b of the heated head in the Stirling engine 70 and an inner surface 32a of the bulkhead member 32, to form a first exhaust passage A in which combusted gas from the burner 24 is introduced along the side surface 94b of the heated head in the Stirling engine 70. The first exhaust passage A extends from the end surface 94a of the heated head in the Stirling engine 70 along the side surface 94b of the heated head in the Stirling engine 70. The first exhaust passage A is formed by a space having a roughly cylindrical shape so as to surround the side surface 94b of the heated head.
In the thermal combustor 20, while the combusted gas from the burner 24 is flowing through the first exhaust passage A, the Stirling engine 70 is heated by the combusted gas heat. In this way, output of the Stirling engine 70 is maintained.

As shown in Figs. 2, 3, and 4, the thermal combustor 20 comprises a first heat exchanger 26. The first heat exchanger 26 includes a cylindrical-shaped heat transfer member 30 and a heat transfer tube 28 arranged along an outer surface 30b of the heat transfer member 30. The heat transfer member 30 is disposed so as to surround the outer surface 32b of the bulkhead member 32, and an inner surface 30a of the heat transfer member 30 faces toward the outer surface 32b of the bulkhead member 32. A gap is provided between the outer surface 32b of the bulkhead member 32 and the inner surface 30a of the heat transfer member 30 to form a second exhaust passage B. A great number of slots are formed on the inner surface 30a of the heat transfer member 30 in order to provide the heat transfer member 30 with a greater area that borders the second exhaust passage B.
The second exhaust passage B communicates with the first exhaust passage A. The second exhaust passage B is located on a side of the first exhaust passage A opposite to the Stirling engine 70, and extends along the first exhaust passage A. Combusted gas flowing from the first exhaust passage A changes direction and flows into the second exhaust passage B. The second exhaust passage B, which is formed by a substantially cylindrical-shaped space, surrounds the first exhaust passage A from outside over the bulkhead member 32.

A plate member 31 for defining a junction area between the first exhaust passage A and the second exhaust passage B is attached to the lower end of the heat transfer member 30 in the drawing. The plate member 31 is fixed to the heat transfer member 30 and extends from the heat transfer member 30 toward the side surface 94b of the heated head in the Stirling engine 70. The plate member 31 may be composed of a metal having a high thermal conductivity, such as, for example, copper. The plate member 31 is cooled by a heat carrier flowing through the heat transfer tube 28 with the plate member 31 acting like a part of the heat transfer member 30.
As described above, the thermal combustor 20 and the Stirling engine 70 are not fixed to each other. Therefore, the plate member 31 is not fixed to any part of the Stirling engine 70, which allows the plate member 31 to slide relative to the side surface 94b of the heated head. Since interstices between the plate member 31 and the end surface 94b of the heated head are not completely sealed, the combusted gas can slightly escape from the interstices between the plate member 31 and the side surface 94b of the heated head.
As shown in Fig. 2, a boot 27 formed of rubber, being an elastic member, is provided between the plate member 31 and the cooler 96 of the Stirling engine 70. The boot 27 forms a space 29 isolated from the atmosphere in conjunction with the plate member 31 and the Stirling engine 70. In this formation, the combusted gas, having escaped from the interstices between the plate member 31 and the side surface 94b of the heated head, is kept in the space 29 to thereby prevent the combusted gas from being released into the atmosphere.
Because the space 29 borders the plate member 31, temperature increase of the space 29 is suppressed. In this way, even when the combusted gas flows into the space 29, the space 29 is protected against high temperatures, which, in turn, prevents the possibility of the boot 27 rupturing due to the combusted gas heat. In other words, the combusted gas heat having escaped from the interstices between the plate member 31 and the side surface 94b of the heated head is also recovered. In addition, a problem of high-temperature combusted gas being ejected to the outside atmosphere from the ruptured boot 27 will not occur.

In the thermal combustor 20, while combusted gas from the burner 24 is flowing through the second exhaust passage B, the combusted gas heat is recovered by the first heat exchanger 26. Because the heat transfer member 30 of the first heat exchanger 26 has the large area that faces the second exhaust passage B, a greater amount of heat can be recovered from the combusted gas.
In the thermal combustor 20, the first exhaust passage A is formed so as to surround the side surface 94b of the heated head in the Stirling engine 70, while the second exhaust passage B is formed so as to surround the first exhaust passage A from outside, and the first heat exchanger 26 is disposed so as to surround the second exhaust passage B from outside. In this manner, escape of combustion heat produced by the burner 24 to the outside atmosphere is prevented, which enables utilization of a greater amount of heat for heating up the Stirling engine or enables a greater amount of heat recovery by means of the first heat exchanger.
The first exhaust passage A is isolated from the first heat exchanger 26 by the second exhaust passage B. The isolation inhibits the first heat exchanger 26 from recovering heat from the combusted gas flowing through the first exhaust passage A. The first exhaust passage A is maintained at a temperature higher than that of the second exhaust passage B, so that the heated heads 94a and 94b of the Stirling engine 70 can be heated to higher temperatures.

As shown in Figs. 2 and 3, the thermal combustor 20 comprises a second heat exchanger 40, which is connected via an exhaust duct 38 to the second exhaust passage B. The combusted gas from the burner 24 is directed from the second exhaust passage B through the exhaust duct 38 (a third exhaust passage C) to the second heat exchanger 40. In an inner region 40a of the second heat exchanger 40, a heat transfer tube 42 is arranged. The heat transfer tube 42 is supplied, from an inlet port 42a thereof, with a heat carrier such as water, which is then discharged from an exhaust port 42b.
The second heat exchanger 40 recovers heat from the combusted gas into the heat carrier in the heat transfer tube 42 while the combusted gas is flowing through the inner region (a fourth exhaust passage D) 40a of the second heat exchanger 40. During the recovery, the second heat exchanger 40 condenses water vapor contained in the combusted gas in order to extract latent heat. The heat carrier, which circulates throughout the heat transfer tube 42 in the second heat exchanger 40, is heated by the heat recovered from the combusted gas. Then, the heat carrier is supplied with an external device, such as air conditioning equipment, or the like.

As illustrated in Figs. 2 and 3, the thermal combustor 20 comprises a blower 44 which draws in the combusted gas from the burner 24 to discharge the combusted gas to the outside. The blower 44 includes a fan 46 and a motor 48 for rotating the fan 46. The blower 44 is connected to a downstream end of the second heat exchanger 40. When the blower 44 rotates the fan 46, the combusted gas from the burner 24 is sequentially sucked into the first exhaust passage A, the second exhaust passage B, the third exhaust passage C, the fourth exhaust passage D, and a fifth exhaust passage E (in the blower 44), and subsequently discharged from an exhaust port 50.
The inside of the exhaust passages A to E is maintained at a negative pressure relative to atmospheric pressure by the blower 44 that draws in the combusted gas from the downstream end of the exhaust passages A to E. As a result, for example, in a case where the boot 27 ruptures, because atmospheric air flows into the exhaust passages A to E from a hole in the ruptured boot 27, a situation in which high-temperature combusted gas is ejected from the ruptured boot 27 into air and the like is prevented.

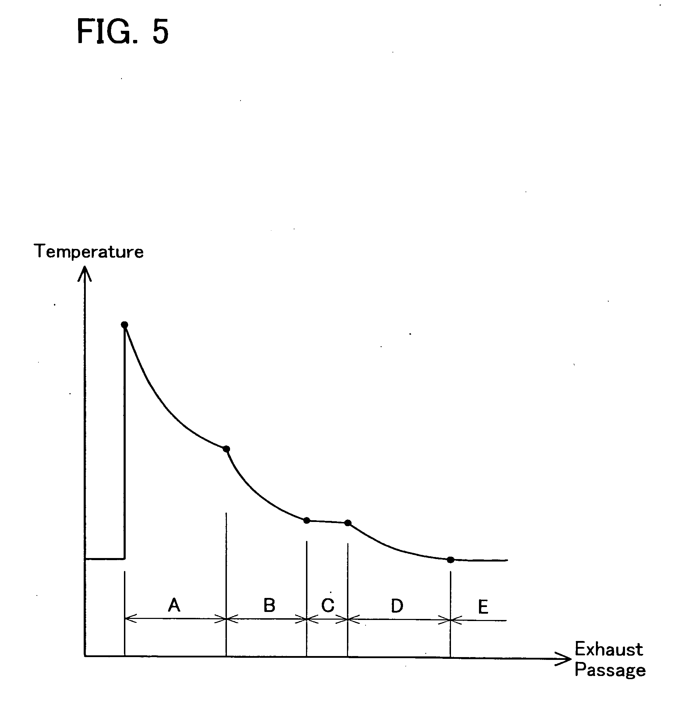

Fig. 5 is a graph showing how the temperature of the combusted gas generated by the burner 24 decreases, while sequentially flowing through from the first exhaust passage A to the fifth exhaust passage E and then discharged from the exhaust port 50. Reference letter A in Fig. 5 represents a zone of the first exhaust passage A, reference letter B in Fig. 5 represents a zone of the second exhaust passage B, reference letter C in Fig. 5 represents a zone of the third exhaust passage C, reference letter D in Fig. 5 represents a zone of the fourth exhaust passage D, and reference letter E in Fig. 5 represents a zone of the fifth exhaust passage E. As depicted in Fig. 5, in the zone of the first exhaust passage A, the combusted gas heat is used for heating the Stirling engine 70, thereby lowering the temperature of the combusted gas. In the zone of the second exhaust passage B, the combusted gas heat is recovered by the first heat exchanger 26, thereby lowering the temperature of the combusted gas. In the zone of the fourth exhaust passage D, the combusted gas heat is recovered by the second heat exchanger 40, thereby lowering the temperature of the combusted gas. Here, in the zone of the fourth exhaust passage D, water vapor contained in combustion gas is condensed, to thereby extract latent heat from the combusted gas. Accordingly, compared to the other zones, the amount of heat recovered from the combusted gas in the fourth exhaust passage D is greater relative to a lowered range of temperature of the combusted gas. In the final stage where the combusted gas is delivered from the exhaust port 50, the temperature of the combusted gas is lowered to a level of approximate room temperatures. In the cogeneration system 10, because exhaust heat is sufficiently reduced, energy efficiency is remarkably enhanced.

The example of employing the free-piston type Stirling engine has been described in the above embodiment, but the technology disclosed therein can be applied with any form or type of Stirling engine.
The example of using combustible gas for fuel has been illustrated in the above-described embodiment, but the technology disclosed herein can also be applied with any fuel type or the like.
A specific embodiment of the present invention is described above, but the embodiment merely illustrates some possibilities of the invention and does not restrict the claims thereof. The art set forth in the claims includes transformations and modifications to the specific examples set forth above.
Furthermore, the technical elements disclosed in the present specification or drawing may be utilized separately or in all types of conjunctions and are not limited to the conjunctions set forth in the claims at the time of filling of the application. Furthermore, the art disclosed in the present specification or figures may be utilized to simultaneously realize a plurality of aims or to realize one of these aims.

## Claims

1. A cogeneration system, comprising:
a Stirling engine that has a pillar-shaped heated head;
a burner that faces an end surface of the heated head of the Stirling engine;
a first exhaust passage that extends along a side surface of the heated head of the Stirling engine;
a second exhaust passage that continues from the first exhaust passage and extends along a side of the first exhaust passage opposite to the Stirling engine ; and
a first heat exchanger that is arranged on a side of the second exhaust passage opposite to the Stirling engine .

2. A cogeneration system as in claim 1, wherein:
the first exhaust passage surrounds the side surface of the heated head of the Stirling engine;
the second exhaust passage surrounds the first exhaust passage on its outside;
the first heat exchanger surrounds the second exhaust passage on its outside.

3. A cogeneration system as in claim 2, further comprising:
a second heat exchanger that is connected to a downstream end of the second exhaust passage.

4. A cogeneration system as in claim 3, wherein
the second heat exchanger is a latent heat exchanger that can extract latent heat from combusted gas by condensing vapor contained in the combusted gas.

5. A cogeneration system as in claim 1, further comprising:
a second heat exchanger that is connected to a downstream end of the second exhaust passage.

6. A cogeneration system as in claim 5, wherein
the second heat exchanger is a latent heat exchanger that can extract latent heat from combusted gas by condensing vapor included in the combusted gas.
